## Europäisches Patentamt

## European Patent Office

## Office européen des brevets

(19)

(11) Veröffentlichungsnummer: **0 008 693**
**B1**

(12)

# EUROPÄISCHE PATENTSCHRIFT

(45) Veröffentlichungstag der Patentschrift:
22.12.82

(51) Int. Cl.³: **B 29 D 7/24**

(21) Anmeldenummer: **79102852.5**

(22) Anmeldetag: **08.08.79**

(54) Verfahren zur Herstellung einer gestreckten Polyesterfolie.

(30) Priorität: **15.08.78 JP 99387/78**

(43) Veröffentlichungstag der Anmeldung:
**19.03.80 Patentblatt 80/6**

(45) Bekanntmachung des Hinweises auf die Patenterteilung:
**22.12.82 Patentblatt 82/51**

(84) Benannte Vertragsstaaten:
**DE FR GB LU NL**

(56) Entgegenhaltungen:
**DE-B-2 528 370**
**US-A-3 088 173**

(73) Patentinhaber: **TORAY INDUSTRIES, INC., 2,
Nihonbashi-Muromachi 2-chome Chuo-ku,
Tokyo 103 (JP)**

(72) Erfinder: **Motegi, Masahiko, 1040-33 Nishi-imacho,
Hikone-shi, Shiga-ken (JP)**
Erfinder: **Kimata, Ikukazu, 1592 Kamitoyoura,
Atsuchi-cho, Gamo-gun, Shiga-ken (JP)**
Erfinder: **Fujita, Saburo, 2-15 Sonoyama, Otsu-shi,
Shiga-ken (JP)**

(74) Vertreter: **Wettlauffer, Willy, Dr. et al, Kalle
Niederlassung der Hoechst AG
Rheingaustrasse 190 Postfach 3540,
D-6200 Wiesbaden 1 (DE)**

## Verfahren zur Herstellung einer gestreckten Polyesterfolie

Die Erfindung bezieht sich auf ein Verfahren zur Herstellung einer separat in Längsrichtung (MD) und in Querrichtung (TD) gestreckten Polyesterfolie mit einem F-5-Wert von jeweils gleich oder grösser als 140 N/mm², gemessen in MD und TD, bei dem man eine um mindestens das 2,6fache in MD und TD bei üblichen Temperaturen $T_1$ gestreckte Polyesterfolie einer Nachstreckung in beiden Richtungen bei einer Temperatur $T_2$ und bei einer linearen Geschwindigkeit von weniger als 8000% pro Minute unterwirft und abschliessend eine Thermofixierung der Polyesterfolie, die bei einer Temperatur zwischen $T_g$ 50 °C ($T_g$ = Glasübergangstemperatur des Polyesters) und $T_m$ – 10 °C ($T_m$ = Schmelzpunkt des Polyesters) liegt, durchführt. Der F-5-Wert der Folie ist ihre Zugfestigkeit, gemessen bei 5% Dehnung.

Ein Verfahren dieser Art ist aus der US-A-3 088 173 bekannt. Diese Druckschrift gibt allerdings die Lehre, beide Streckstufen, d. h. auch die Vorstreckung, simultan durchzuführen. Es wird zwar auch erwähnt, dass anstelle der simultanen Streckstufen separat in Längs- und Querrichtung gestreckt werden kann. Ein Streckverfahren, bei dem eine der beiden Streckstufen in separaten und die andere Streckstufe in simultanen Streckungen in Längs- und Querrichtung durchgeführt wird, ist dieser Druckschrift nicht zu entnehmen.

Die Weiterentwicklung und Ausbreitung der Informationstechnologie hat den Bedarf an dünneren Folien in letzter Zeit anwachsen lassen. Auf diesem Gebiet sind jedoch mit der üblichen dünnen Polyesterfolie keine ausreichenden Ergebnisse zu erzielen. Von der dünnen Folie wird eine noch bessere mechanische Festigkeit in MD und TD verlangt. Im allgemeinen liegen die F-5-Werte bei einer herkömmlichen biaxial gestreckten Polyesterfolie sowohl in MD als auch in TD zwischen 100 und 110 N/mm². Eine Folie mit hoher Zugfestigkeit in MD hat zwar gute Eigenschaften in dieser Richtung, jedoch einen schlechten F-5-Wert von nur 90 bis 110 N/mm² in TD. Dies bedeutet, dass eine solche dünne Folie nicht zufriedenstellend eingesetzt werden kann.

Es stellte sich somit die Aufgabe, ein geeignetes Verfahren zur Herstellung einer Polyesterfolie mit hoher Zugfestigkeit in beiden Streckrichtungen zu schaffen, das durch weniger Folienabrisse beim Verstrecken und durch eine gute Durchführbarkeit gekennzeichnet ist.

Die Aufgabe wird gelöst durch ein Verfahren der eingangs genannten Art, dessen kennzeichnendes Merkmal darin besteht, dass die Nachstreckung der Polyesterfolie simultan um das 1,05- bis 1,9fache ihrer Abmessung in MD und um mehr als das 1,0- bis zum 1,9fachen ihrer Abmessung in TD bei einer Temperatur $T_2$ mindestens 10 °C über $T_1$ und zwischen $T_g + 40$ °C und $T_m$–60 °C erfolgt.

Die Auswahl der Temperatur wird durch den Stand der Technik nicht nahegelegt, denn eine Anregung, zur Lösung der Aufgabe bei der simultanen Streckstufe eine mindestens um 10 °C höhere Temperatur zu wählen, vermag der Fachmann der obengenannten Literaturstelle nicht zu entnehmen.

Bei einem nicht vorveröffentlichten Verfahren (EU-A-0 008 679) werden die gleichen Streckbedingungen eingehalten. Die zweite Streckstufe ist jedoch keine Simultanstreckung, sondern besteht aus zwei separaten Streckungen der Folie in Längs- und in Querrichtung.

Für ein wirksames Strecken der Folie, bei dem Folienabrisse vermieden werden, ist es wichtig, als letzten Streckvorgang ein Simultannachstrecken um weniger als das 1,9fache der Abmessungen durchzuführen.

Die nach dem erfindungsgemässen Verfahren hergestellte Folie hat ausgezeichnete F-5-Werte von wenigstens 140 N/mm² in MD und TD. Diese hohen F-5-Werte tragen zu guter Rollenaufmachung der Folie, guter Weiterverarbeitbarkeit zu Magnetbändern und Kondensatoren und guten Laufeigenschaften der aus der Folie hergestellten Magnetbänder bei.

Der F-5-Wert in MD und TD liegt bevorzugt höher als 155 N/mm², insbesondere bevorzugt über 180 N/mm². In den genannten Punkten hat die Folie damit grosse Vorteile gegenüber einer herkömmlichen Folie.

Ein derartig hoher F-5-Wert kann durch Simultannachstrecken einer biaxial gestreckten Folie unter besonderen Bedingungen erzielt werden. Das Produkt $A \times A'$ aus dem Streckverhältnis (A) in MD der biaxial vorgestreckten Folie und dem Streckverhältnis (A') in MD beim Simultannachstrecken, sowie das Produkt $B \times B'$ aus dem Streckverhältnis (B) in TD der biaxial vorgestreckten Folie und dem Streckverhältnis (B') in TD beim Simultannachstrecken muss jeweils mindestens 4,0, bevorzugt 4,5, insbesondere bevorzugt 5,0, betragen. Am vorteilhaftesten liegt das Produkt über 5,5.

Eine vorgestreckte Folie mit hohem biaxialem Orientierungsgrad für das anschliessende Simultanstrecken wird nach den üblichen Verfahren durch Strecken in der Reihenfolge MD–TD oder TD–MD hergestellt. Die im wesentlichen amorphe Folie wird bei einer Temperatur, die vorzugsweise zwischen $T_g$ und $T_m$–60 °C, insbesondere bevorzugt zwischen $T_g + 10$ °C und $T_g + 40$ °C liegt, um mehr als das 2,6fache ihrer ursprünglichen Abmessungen, vorzugsweise um das 2,6- bis 6,0fache, insbesondere bevorzugt um das 2,8- bis 5,0fache zunächst in einer Richtung gestreckt. Danach wird sie senkrecht zur ersten Streckrichtung bei einer Temperatur, die vorzugsweise zwischen $T_g$ und $T_g + 80$ °C, insbesondere bevorzugt zwischen $T_g + 10$ °C und $T_g + 60$ °C, liegt, um mehr als das 2,6fache ihrer ursprünglichen Abmessungen, vorzugsweise um das 2,6- bis 6,0fache gestreckt.

Nach der vorliegenden Erfindung ist insbesondere ein Streckverfahren in der Reihenfolge MD–TD geeignet. Ausser der genannten biaxial vorgestreckten Folie kann auch eine in der Reihenfolge MD–MD–TD oder MD–TD–MD biaxial vorgestreckte Folie verwendet werden. Wenn die biaxial vorgestreckte Folie vor dem Simultannachstrecken bei einer Temperatur zwischen der Simultannachstrecktemperatur $T_s$ und $T_m-10\,°C$, vorzugsweise zwischen $T_s+5\,°C$ und $T_s+30\,°C$ vorfixiert wird, kann eine noch höhere Orientierung erzielt werden.

Als vorteilhafte Simultanstreckmethode wird beispielsweise das Spannrahmenverfahren empfohlen. Im Spannrahmen wird dabei die von zahlreichen Kluppen gehaltene Folie durch Veränderung der Führungsschienenbreite in TD und durch Veränderung des Kluppenabstands in MD gestreckt. Die Folie, auch eine solche mit verdickten oder mit gefalteten Rändern, ist dabei in die Kluppen eingeklemmt.

Beim Simultannachstrecken ist die Temperatur mindestens um $10\,°C$ höher als beim vorhergehenden biaxialen Strecken und liegt im Bereich von $T_g+40\,°C$ bis $T_m-60\,°C$. Das Streckverhältnis beträgt das 1,05- bis 1,9fache der Abmessungen in MD und mehr als das 1,0fache bis zum 1,9fachen der Abmessungen in TD.

Ein Streckverhältnis von mehr als 1,0 in TD bedeutet, dass die Folienbreite vergrössert wird und auch ein Querschrumpfen oder Einschnüren beim MD-Strecken vermieden wird. Das Streckverhältnis in TD liegt bevorzugt zwischen 1,05 und 1,9. Das Streckverhältnis beim Simultanstrecken wird unter Berücksichtigung des Orientierungszustandes der biaxial vorgestreckten Folie bestimmt, wobei ein Orientierungseffekt jedoch nicht bei einem Simultanstreckverhältnis unter 1,05 (hauptsächlich in MD) erwartet werden kann. Beim Strecken um mehr als das 1,9fache der Abmessungen treten Folienabrisse, ein Festigkeitsverlust in TD und Qualitätsschwankungen mit Einschnürungen in TD auf, weil dann der Abstand zwischen jeweils zwei Kluppen beim MD-Strecken zu gross wird. Das besonders bevorzugte Streckverhältnis beträgt zwischen 1,25 und 1,7.

Die lineare Geschwindigkeit muss weniger als 8000% pro Minute betragen. Bei einer linearen Geschwindigkeit über 8000% pro Minute kommt es häufig zu Folienabrissen. Bevorzugt ist die lineare Geschwindigkeit geringer als 5000% pro Minute. Streckverhältnis und lineare Streckgeschwindigkeit sind in MD und TD nicht unbedingt gleich. Für die richtige Wahl dieser Grössen müssen die Folieneigenschaften berücksichtigt werden.

Eine vorgestreckte Folie mit geringem biaxialen Orientierungsgrad, d.h. eine um weniger als das 2,6fache ihrer ursprünglichen Abmessungen vorgestreckte Folie, kann durch Simultannachstrecken nicht in eine Folie mit hoher Zugfestigkeit umgewandelt werden. In einem solchen Fall treten häufig Folienabrisse auf und die Verstreckbarkeit ist schlecht. Das Verfahren der Erfindung, bei dem eine vorgestreckte Folie mit hohem biaxialem Orientierungsgrad im simultanen Nachstreckvorgang mit geringem Streckverhältnis gestreckt wird, erweist sich dagegen als geeignet.

Beim Thermofixieren wird das Spannrahmenverfahren mit Kluppen dem Walzenverfahren vorgezogen. Die Folie wird im Temperaturbereich zwischen $T_g+50\,°C$ und $T_m-10\,°C$, vorzugsweise bei einer Temperatur über $T_g+10\,°C$ und zwischen $T_g+80\,°C$ und $T_m-20\,°C$, unter Spannung thermofixiert. Zur Verbesserung der Massbeständigkeit kann jedoch erforderlichenfalls auch mit geringer Relaxation gearbeitet werden.

Die Polyesterfolie nach dieser Erfindung weist keine Fehler, wie z.B. Falten in MD beim Aufwickeln zu einer Rolle, auf. Sie zeigt eine gute Rollenaufmachung und eine hohe Festigkeit nicht nur in MD, sondern auch in TD. Sie eignet sich insbesondere in einer Dicke unter $10\,\mu m$ zur Verwendung als Trägerfolie für Langspielmagnetbänder und zur Herstellung von Kondensatoren.

Als Material innerhalb des erfindungsgemässen Verfahrens kann Polyäthylenterephthalat, ein Mischpolyester aus mindestens 70 Gew.-% Polyäthylenterephthalat, eine Mischung aus mindestens 70 Gew.-% Polyäthylenterephthalat mit anderen Polymerisaten und/oder Zusätzen oder Polyäthylen-2,6-naphthalat sein. Die Intrinsic-Viskosität liegt im Bereich von 0,5 bis 1,0, vorzugsweise im Bereich von 0,4 bis 0,9.

Die Erfindung wird durch die folgenden Beispiele näher erläutert, wobei eine Einschränkung hierauf nicht bestehen soll. $T_g$ und $T_m$ wurden nach dem folgenden Verfahren gemessen:

Glasübergangstemperatur ($T_g$)

Gemessen mit einem Dilatometer an einer im wesentlichen amorphen Folie, bei einer Aufheizgeschwindigkeit von $5\,°C/min$. $T_g$ ist die Temperatur am Wendepunkt der Kurve spezif. Volumen/Temperatur.

Schmelzpunkt ($T_m$)

Gemessen an einer Folie nach dem Verfahren der Kalorimetrie mit differentieller Abtastung (DSC) bei einer Aufheizgeschwindigkeit von $10\,°C/min$. $T_m$ ist die Temperatur an der Spitze der Schmelzkurve.

Beispiele 1 bis 4, Kontrollbeispiel A

Eine Polyäthylenterephthalatschmelze mit einer Intrinsic-Viskosität von 0,70 wurde auf einer Giesstrommel zu einer amorphen Folie extrudiert. Diese Folie wurde dann zwischen Rollenpaaren, die mit unterschiedlicher Geschwindigkeit liefen, in Längsrichtung (MD) um das 3,5fache verstreckt. Auf den Längsstreckvorgang folgte ein Querstrecken der Folie im Spannrahmen auf das 3,5fache, und im Anschluss an das Querstrecken wurde die biaxial verstreckte Folie bei einer Temperatur von $150\,°C$ und mit einer linearen Geschwindigkeit von 3000% pro Minute im Spannrahmen simultangestreckt. Sie wurde dann bei $200\,°C$ unter Spannung thermofixiert. Die Folie hatte eine Dicke von $6\mu m$. Die Versuchsbedingungen und -ergebnisse sind in Tabelle 1 angegeben. Sowohl in MD als auch in TD wiesen die Folien eine hohe Festigkeit auf. Es kam nur selten zu Folienabrissen beim Strecken, und die Rollenaufmachung war gut. Bei einem Simultanstreckverhältnis von mehr als 1,9 traten häufig Folienabrisse auf. Die abnehmende Tendenz des F-5-Wertes bei zunehmendem Streckverhältnis ist auf das Zurückgehen der Orientierung in TD durch den vergrösserten Abstand zwischen den benachbarten Kluppen zurückzuführen.

Auf die Folien wurden eine Magnetbeschichtung aus γ-Eisenoxid und einem Bindemittel in einer Dicke von 3,5µm aufgetragen und so ein Magnetband hergestellt. Die Laufeigenschaften von 1,27 cm (1/2 Zoll) breiten und 200 m langen Magnetbändern wurden durch Abspielen in einem Videorecorder ermittelt. Besonderheiten, wie z.B. Ausgangsleistung und Signalausfälle, wurden gleichfalls gemessen. Bei der Beurteilung der Laufeigenschaften ging man vom anfänglichen Laufzustand aus und stellte die Veränderungen während eines Dauerversuches über 500 Durchgänge fest.

Es wurde wie folgt bewertet:
⊙  sehr gut
O  gut
△  mässig
x  schlecht

Beispiel 5 bis 9, Kontrollbeispiele B und C

Es wurde eine Polyäthylenterephthalatfolie nach dem in Beispiel 1 beschriebenen Verfahren hergestellt, mit dem Unterschied, dass die Streckverhältnisse der biaxial vorgestreckten Folie 4,0 in MD und 4,2 in TD betrugen. Die Simultanstreckverhältnisse sind in Tabelle 2 angegeben. Die Folien hatten eine hohe Festigkeit in MD und TD, es kam nur selten zu Folienabrissen und die Rollenaufmachung war gut. Die Folie nach Kontrollbeispiel C entsprach einer herkömmlich biaxial gestreckten Folie.

Beispiel 10 bis 14

Nach dem für die Beispiele 5 bis 9 beschriebenen Verfahren wurde eine Polyäthylenterephthalatfolie hergestellt, wobei allerdings die biaxial gestreckte Folie vor dem Simultanstrecken bei 200 °C unter Spannung thermofixiert wurde. Wie aus Tabelle 3 hervorgeht, verschlechterte sich die Streckbarkeit durch das Thermofixieren nicht. Die Folieneigenschaften waren vielmehr verbessert. In TD ist eine merkliche Verbesserung festzustellen, die anscheinend darauf beruht, dass durch das Thermofixieren eine Relaxation der Folie in TD beim Simultanstreckvorgang verhindert wurde.

Beispiel 15 und 16

Es wurde eine Polyäthylenterephthalatfolie nach dem Verfahren aus Beispiel 1 hergestellt, mit dem Unterschied, dass die Streckverhältnisse bei der biaxial vorgestreckten Folie 3.0 in MD und 4.0 in TD betrugen. Die Simultanstreckverhältnisse sind in Tabelle 4 angegeben. Die lineare Streckgeschwindigkeit in Beispiel 15 war 4000% pro Minute in MD und 800% pro Minute in TD. In Beispiel 16 betrug die lineare Geschwindigkeit in MD und TD 4000% pro Minute. Wie aus Tabelle 4 hervorgeht, wurden gute Ergebnisse erzielt.

Beispiel 17, Kontrollbeispiel D

Es wurde eine Polyäthylenterephthalatfolie nach dem Verfahren aus Beispiel 1 hergestellt, mit dem Unterschied, dass die Streckverhältnisse bei der biaxial vorgestreckten Folie hier 3.0 in MD und 5,0 in TD betrugen. Das Simultanstreckverhältnis war 1,5 in MD und 1,0 in TD. In Kontrollbeispiel D wurde im Walzenverfahren anstelle des Simultanstreckverfahrens nachgestreckt. Dabei wurde die Folie bei 150 °C und mit einer linearen Geschwindigkeit von 50 000% pro Minute um das 1,5fache in MD nachgestreckt. Die Tabelle 5 zeigt den Effekt der Verbesserung der Zugfestigkeit in TD beim Simultanstreckverfahren.

Kontrollbeispiele E bis G

Die im wesentlichen amorphe Folie aus Beispiel 1 wurde bei einer Temperatur von 85 °C und mit einer linearen Geschwindigkeit von 3000% pro Minute in einem Spannrahmen simultan gestreckt und anschliessend bei 200 °C unter Spannung thermofixiert. Die Streckverhältnisse gehen aus Tabelle 6 hervor. Bei einem hohen Streckverhältnis nimmt die Häufigkeit der Folienabrisse beim Streckvorgang zu. Wird dagegen zur Vermeidung von Folienabrissen beim Verstrecken ein relativ geringes Streckverhältnis gewählt, sind die Folieneigenschaften unzureichend.

Kontrollbeispiele H bis M

Es wurde eine Polyäthylenterephthalatfolie nach dem Verfahren aus Beispiel 1 hergestellt, mit dem Unterschied, dass in Kontrollbeispiel H die biaxial vorgestreckte Folie bei 150 °C und mit einer linearen Geschwindigkeit von 50 00% pro Minute im Walzenverfahren anstelle des Simultanstreckverfahrens um das 1,5fache in MD nachgestreckt wurde, in Kontrollbeispiel I die im wesentlichen amorphe Folie zunächst bei 82 °C um das 2,5fache in MD, dann bei 120 °C um das 1,2fache in TD verstreckt und anschliessend bei 100 °C jeweils um das 2,0fache in MD und TD simultangestreckt wurde, in Kontrollbeispiel K die im wesentlichen amorphe Folie bei 90 °C und mit einer linearen Geschwindigkeit von 1300% pro Minute nur in TD gestreckt und anschliessend bei 110 °C um das 4,0fache in MD und um das 1,2fache in TD simultangestreckt wurde und in Kontrollbeispiel L die im wesentlichen amorphe Folie bei 85 °C und mit einer linearen Geschwindigkeit von 3000% pro Minute jeweils um das 3,5fache in MD und TD simultangestreckt und danach bei 150 °C und mit einer linearen Geschwindigkeit von 50 000% pro Minute im Walzenverfahren anstelle des Simultanstreckverfahrens um das 1,5fache in MD nachgestreckt wurde.

Wie aus Tabelle 6 hervorgeht, wies jede Folie eine geringe Festigkeit und eine schlechte Rollenaufmachung auf. Obwohl die Streckverhältnisse insgesamt in Beispiel 1 und in Kontrollbeispiel H nahezu vergleichbar waren, war die Folienfestigkeit in Beispiel 1 höher als in Kontrollbeispiel H. Diese Werte zeigen, dass ein Simultannachstrecken der biaxial vorgestreckten Folie zur Erzielung einer hohen Festigkeit sehr wirksam ist.

In Kontrollbeispiel M wurde die im wesentlichen amorphe Folie bei 82 °C um das 2,0fache in MD und bei 120 °C um das 2,0fache in TD verstreckt, dann wurde sie bei 130 °C jeweils um das 2,5fache in MD und TD simultangestreckt. Wie dieses Beispiel zeigt, sind bei einer Folie mit geringem biaxialem Orientierungsgrad selbst bei einem hohen Streckverhältnis beim Simultanstrecken die Eigenschaften hinsichtlich der Streckbarkeit und die Rollenaufmachung schlechter als bei einer Folie, die im Anschluss an das biaxiale Strecken mit hohem Streckverhältnis mit einem relativ geringen Streckverhältnis simultan nachgestreckt wurde.

Tabelle 1

| | Simultan streckverhältnis in MD bzw. TD | F-5-Wert (N/mm²) MD | TD | Häufigkeit von Filmabrissen (pro 9000 m) | Rollenaufmachung | Laufeigenschaften |
|---|---|---|---|---|---|---|
| Beispiel 1 | 1,3 | 156 | 152 | 0 | O | O |
| Beispiel 2 | 1,5 | 180 | 183 | 0 | O | ⊙ |
| Beispiel 3 | 1,7 | 203 | 192 | 0 | O | ⊙ |
| Beispiel 4 | 1,9 | 237 | 185 | 1 | O | ⊙ |
| Kontrollbeispiel A | 2,0 | 240 | 170 | 13 | Bruch | — |

Tabelle 2

| | Simultanstreckverhältnis in MD bzw. TD | F-5-Wert (N/mm²) MD | TD | Häufigkeit von Filmabrissen (pro 9000 m) | Rollenaufmachung |
|---|---|---|---|---|---|
| Kontrollbeispiel B | 1,0 | 118 | 120 | 0 | Δ |
| Beispiel 5 | 1,05 | 140 | 146 | 0 | O |
| Beispiel 6 | 1,25 | 156 | 168 | 0 | O |
| Beispiel 7 | 1,5 | 189 | 190 | 0 | O |
| Beispiel 8 | 1,7 | 220 | 201 | 0 | O |
| Beispiel 9 | 1,9 | 253 | 193 | 2 | O |
| Kontrollbeispiel C | 2,0 | 260 | 180 | 21 | Bruch |

Tabelle 3

| | Simultanstreckverhältnis in MD bzw. TD | F-5-Wert (N/mm²) MD | TD | Häufigkeit von Filmabrissen (pro 9000 m) | Rollenaufmachung |
|---|---|---|---|---|---|
| Beispiel 10 | 1,05 | 148 | 150 | 0 | O |
| Beispiel 11 | 1,25 | 165 | 170 | 0 | O |
| Beispiel 12 | 1,5 | 201 | 205 | 0 | O |
| Beispiel 13 | 1,7 | 240 | 235 | 0 | O |
| Beispiel 14 | 1,9 | 260 | 230 | 3 | O |

Tabelle 4

| | Simultanstreckverhältnis MD | TD | F-5-Wert (N/mm²) MD | TD | Häufigkeit von Filmabrissen (pro 9000 m) | Rollenaufmachung |
|---|---|---|---|---|---|---|
| Beispiel 15 | 1,5 | 1,1 | 160 | 143 | 0 | O |
| Beispiel 16 | 1,5 | 1,5 | 159 | 201 | 0 | O |

Tabelle 5

|  | Streck-verhältnis | F-5-Wert (N/mm²) | | Häufigkeit von Film-abrissen (pro 9000 m) | Rollenauf-machung |
|---|---|---|---|---|---|
|  |  | MD | TD |  |  |
| Beispiel 17 | MD-TD-simultan (1,5 × 1,0) | 160 | 160 | 0 | O |
| Kontroll-beispiel D | MD-TD-MD | 169 | 109 | 0 | Δ |

Tabelle 6

|  | Streckprozess | F-5-Wert (N/mm²) | | Häufigkeit von Film-abrissen (pro 9000 m) | Rollenauf-machung | Laufeigen-schaften |
|---|---|---|---|---|---|---|
|  |  | MD | TD |  |  |  |
| Kontrollbeispiel E | simultan (4,0 × 4,0) | 118 | 120 | 0 | Δ | x |
| Kontrollbeispiel F | simultan (4,5 × 4,5) | 125 | 129 | 1 | Δ | x |
| Kontrollbeispiel G | simultan (5,0 × 5,0) | 138 | 139 | 11 | Bruch | — |
| Kontrollbeispiel H | MD-TD-MD (3,5 − 3,5 − 1,5) | 180 | 98 | 0 | Δ | x |
| Kontrollbeispiel I | MD-TD-simultan (2,5 − 1,2 − 2,0 × 2,0) | 183 | 102 | 0 | Δ | x |
| Kontrollbeispiel K | TD-simultan (2,5 − 4,0 × 1,2) | 151 | 105 | 0 | Δ | x |
| Kontrollbeispiel L | simultan-MD (3,5 × 3,5 − 1,5) | 185 | 99 | 0 | Δ | x |
| Kontrollbeispiel M | MD-TD-simultan (2,0 − 2,0 − 2,5 × 2,5) | 121 | 110 | 8 | Δ | x |

**Patentansprüche**

1. Verfahren zur Herstellung einer separat in Längsrichtung (MD) und in Querrichtung (TD) gestreckten Polyesterfolie mit einem F-5-Wert von jeweils gleich oder grösser als 140 N/mm², gemessen in MD und TD, bei dem man eine um mindestens das 2,6fache in MD und TD bei üblichen Temperaturen $T_1$ gestreckte Polyesterfolie einer Nachstreckung in beiden Richtungen bei einer Temperatur $T_s$ und bei einer linearen Geschwindigkeit von weniger als 8000% pro Minute unterwirft und abschliessend eine Thermofixierung der Polyesterfolie, die bei einer Temperatur zwischen $T_g + 50$ °C ($T_g =$ Glasübergangstemperatur des Polyesters) und $T_m - 10$ °C ($T_m =$ Schmelzpunkt des Polyesters) liegt, durchführt, dadurch gekennzeichnet, dass die Nachstreckung der Polyesterfolie simultan um das 1,05- bis 1,9fache ihrer Abmessung in MD und um mehr als das 1,0fache bis zum 1,9fachen ihrer Abmessung in TD bei einer Temperatur $T_s$ mindestens 10 °C über $T_1$ und zwischen $T_g + 40$ °C und $T_m - 60$ °C erfolgt.

2. Verfahren nach Anspruch 1, dadurch gekennzeichnet, dass man die in MD und TD biaxial gestreckte Polyesterfolie vor der simultanen Nachstreckung einer thermischen Vorfixierung bei einer Temperatur zwischen $T_s$ und $T_m - 10$ °C unterwirft.

**Claims**

1. Process for the manufacture of a polyester film which is separately stretched in the longitudinal direction (MD) and in the transverse direction (TD) and has a F-5 value which is, in each case, equal to or greater than 140 N/mm², as measured in MD and TD, the process comprising subjecting a polyester film which has been stretched by at least 2.6 times its dimensions in MD and TD at usual temperatures $T_1$, to post-stretching in the two directions at a temperature $T_s$ and at a linear rate of less than 8000% per minute and finally heat-setting the polyester film at a temperature between $T_g + 50$ °C (Tg = glass transition temperature of the polyester) and $T_m - 10$ °C ($T_m =$ melting point of the polyester), characterised in that post-stretching of the polyester film is effected simultaneously by 1.05 to 1.9 times its dimension in MD and by more than 1.0 up to 1.9 times its dimension in TD, at a temperature $T_s$ which exceeds $T_1$ by at least 10 °C and ranges between $T_g + 40$ °C and $T_m - 60$ °C.

2. A process as claimed in claim 1, wherein the polyester film which has been biaxially stretched in MD and TD is pre-heat set at a temperature between $T_s$ and $T_m-10°C$, before it is simultaneously post-stretched.

**Revendications**

1. Procédé pour la fabrication d'une feuille de polyester étirée séparément en sens longitudinal (MD) et en sens transversal (TD) avec un indice F-5 chaque fois égal ou supérieur à 140 N/mm², mesuré en MD et en TD, dans lequel on soument une feuille de polyester étireé d'au moins un facteur 2,6 en MD et en TD à une température habituelle $T_1$, d'abord à un postétirage dans les deux sens à une température $T_s$ et à une vitesse linéaire inférieure à 8000% par minute, et ensuite à une thermofixation à une température comprise entre $T_g+50°C$ ($T_g$ = température de transition vitreuse du polyester) et $T_m-10°C$ ($T_m$ = point de fusion du polyester), caractérisé en ce que le postétirage de la feuille s'effectue simultanément jusqu'à entre 1,05 et 1,9 fois sa dimension en MD, et plus de 1,0 fois jusqu'à 1,9 fois sa dimension en TD, à une température $T_s$ supérieure d'au moins 10°C à $T_1$, et comprise entre $T_g+40°C$ et $T_m-60°C$.

2. Procédé selon la revendication 1, caractérisé en ce que l'on soumet la feuille de polyester biaxialement étirée en MD et en TD avant le postétirage en stades simultanés à une préfixation thermique à une température $T_s$ et $T_m-10°C$.